# EUROPEAN PATENT SPECIFICATION

(11) **EP 2 022 338 B1**
(45) Date of publication and mention of the grant of the patent: **18.03.2009**
(21) Application number: 07110971.4
(22) Date of filing: 25.06.2007
(51) Int. Cl.: A23G 9/28, A23G 9/48

(54) **Frozen confection**
Gefrorene Süßware
Confiserie surgelée

(43) Date of publication of application: 11.02.2009
(73) Proprietor: Unilever PLC, London EC4Y 0DY (GB); Unilever N.V., 3013 AL Rotterdam (NL)
(72) Inventor: Gispert, Juan Carlos, 08018 Barcelona (ES); Monge, Sebastian, 08018 Barcelona (ES); Viñallonga, Juan, 08029 Barcelona (ES)
(74) Representative: Clarke, Christopher John

(56) References cited:
- EP-A- 1 277 411
- GB-A- 2 143 718
- US-A- 4 932 317
- US-B1- 6 514 555

## Description

### Technical Field of the Invention

The present invention relates to frozen confections. In particular the present invention relates to frozen confections in containers suitable for scooping, for example in ice cream parlours.

### Background of the Invention

Frozen confections comprising inclusions, such as "choc chip" ice cream, are well known and popular. Typically such confections will be served from a container by scooping. Unfortunately, however, it may occur with conventional confections that the inclusions are unevenly distributed within the container. This results in scoops which have significantly more inclusions than other scoops from the same container. On the other hand customers often find the disordered and "hand made" appearance of randomly distributed inclusions appealing.

Thus there is a need to provide a frozen confection in container, which can be scooped out of the container and each scoop of the container comprises more or less the same amount of inclusions.

US 6,514,555 (Nestec S.A.) discloses the manufacture of composite articles of frozen confectionary containing inclusions by forming extrusions of a central filling surrounded by a sleeve of frozen composition using a specific extrusion process which involves coiling up the extrusion or folding it on itself. However, the coiling up or folding of the extrusion may still result in a degree of uneven distribution of inclusions in the container.

We have now found that it is possible to address the aforementioned need by providing a frozen confection in a container having a specific layered structure.

In a first aspect, the present invention provides a frozen confection having arranged layers of inclusion material and confection material in a container, wherein the container has an opening suitable for scooping, characterized in that the layers extend away from the opening and are arranged for the whole width of the opening.

Such an arrangement is found to allow for the serving of scooped portions comprising randomly distributed inclusions and where each scoop of the container comprises more or less the same amount of inclusions.

There is no limit to the number of layers. Typically, however, the confection will comprise a least 2 layers of inclusion material interleaved with layers of confection material, more preferably at least 4 and most preferably from 6 to 50. In a most preferred embodiment, the confection comprises at least 2 layers of inclusion material per 5 cm of the width of the container as this ensures a good amount of inclusions per scoop. More preferably there are from 3 to 10 layers of inclusion per 5 cm.

Typically the opening will be at the top of the container and the layers will extend vertically.

The layers of the frozen confection need not be perfectly planar. In fact it is possible that each layer (confection material layers and inclusion layers) has a different shape from the others. In general, however, the layers will have approximately the same configuration and will at least have approximately the same dimensions and be aligned in the same direction.

It is also not mandatory that the layers are continuous. It can happen (especially if the layers are very thin) that some holes or imperfections can be present. It is, however, preferred that each layer is in one piece.

We have found that it is advantageous to provide the layers with a wavelike shape as this increases the distribution of inclusion material in a direction other than away from the opening. For example, if the opening is at the top of the container then the wavelike form of the layers increases the spread of inclusion material in a horizontal direction.

To maximize the distribution of inclusions within the container it is preferable that the layers extend away from the opening for substantially the whole of the container. Thus it is preferred that where the container has an end-wall opposite the opening that the layers extend for substantially the whole distance between the opening and the end wall. Where the opening is at the top of the container, this will mean that the layers extend for substantially the whole height of the container.

Also in order to maximize the distribution of inclusions within the container the layers are arranged for at least the whole width of the opening. Preferably the layers are arranged for the whole width of the container. Thus for a container having a side wall extending away from the opening, the side wall comprising at least two opposing faces, the layers are preferably arranged for substantially the whole distance between the two faces.

In order to provide for easy disruption of the layers of inclusion material on scooping, it is preferable that the layers of inclusion material have a thickness of less than 2 mm. Suitably the layers of inclusion material are 0.5 - 1.5 mm thick. The thickness of one single layer need not be identical over the length of the layer. But preferably the thickness does not vary substantially over the length of a layer. The thickness of the different layers in the frozen confection can vary, especially in the case that different inclusion materials are used.

Although the inclusion material may be any inclusion material typically used in frozen confections (such as chocolate, chocolate-flavoured couveture, fruit puree, caramel, honey, nougat, praline, sauce or a mixture thereof) it is particularly preferred that the inclusion material is a crispy composition as this aids disruption on scooping. "Crispy composition" refers to the texture of the inclusion material when frozen. The crispy composition may be fat-based or water-based. The fat may be a vegetable butter, such as cocoa butter, a cocoa butter substitute or equivalent, more particularly a fat-based couverture of the type commonly used in confectionery. It may also be a water-based or sugar-containing composition, such as a syrup or sauce or cooked sugar. A fat-based, water-based or sugar-containing composition may contain flavourings or colourants. Most preferred are fat-based compositions which have a solidification point above 0°C, more preferably above 10°C. The solidification point should not be too high, however, otherwise the inclusion material may not be sufficiently flowable to extrude at a temperature compatible with frozen confection manufacture. Therefore it is preferred that the solidification point is below 60°C, more preferably below 40°C and most preferably below 30°C.

The confection material may be any material typical of frozen confections such as ice cream, fat-free ice cream, sorbet, frozen yogurt or a mixture thereof. Preferably the confection material is aerated as this aids in texture contrast with the inclusion material.

The thickness of the confection material layer is typically much thicker than the inclusion layer. This ensures that the amount of inclusions in each scoop is not too high. Typically the thickness of the confection material layers is at least 0.5 cm, more preferably from 1 to 5 cm.

The size of the container is not critical for the present invention, provided that it has an opening suitable for access to a scoop. The size of the container can be adapted for domestic use or catering use (e.g. in restaurants, ice cream parlours etc). The volumetric capacity of the containers can range from about 0.2 to 2 litres for domestic use up to about 1 to 10 litres for non-domestic use.

The container can be made from any material suitable for a container which comprises frozen confections. Suitable materials are, for example, metals or plastic material. The container can have any shape. A suitable shape is, for example, approximately cuboid with the top face of the cuboid being absent and thus forming the opening.

In a further aspect, the present invention provides a method for serving a portion of frozen confection, the method comprising:
- providing a frozen confection as described above; and
- scooping a portion from the frozen confection, thereby disrupting the layers of inclusion material to produce a random pattern of inclusion material in the portion.

Preferably, the scooped portion is placed in an edible receptacle such as a wafer cone.

The confection of the present invention can be manufactured in any suitable manner. However, typically the process will involve extruding parallel streams of confection material and flowable inclusion material into the container.

In a further aspect still, the present invention provides a preferred process for the production of the frozen confection, the process comprising:
- providing a container having an opening suitable for scooping;
- extruding a plurality of streams of confection material into the container, each stream being extruded from an outlet; and
- extruding a plurality of streams of flowable inclusion material into the container between the streams of confection material, each stream being extruded from an outlet;
wherein during extrusion of the confection material and flowable inclusion material the outlets are within the container and are moved towards the opening thereby to form arranged layers of confection material and inclusion material extending away from the opening and arranged for the while width of the opening.

Preferably the streams are extruded for substantially the whole height of the container. Thus, where the container comprises an end wall opposite the opening it is preferred that during extrusion of the confection material and flowable inclusion material the outlets are moved from the end wall to the opening.

The feature of moving the outlets towards the opening encompasses the possibility that the outlets remain static and the container is moved in order to change its position relative to the outlets. Typically the opening will be at the top of the container, the extrusion will be vertically downwards and the movement of the outlets vertically upwards.

The streams are typically extruded simultaneously into the container.

To obtain wave shape layers it is possible to oscillate the container and/or the outlets, for example in a direction orthogonal to the extrusion direction. However, we have found that such movement of the outlets is not necessary and that waveshaped extrusions can be formed by controlling the flow rates and viscosities of the streams. The viscosity of the confection material is particularly suitable when the extrusion temperature of the confection material is between -4°C to -7°C, more preferably about -6°C. Similarly, when the inclusion material is a fatty material such as chocolate, the viscosity of the inclusion material is particularly suitable when the extrusion temperature of the inclusion material is at least 10°C above the solidification temperature, more preferably at least 15°C above the solidification point. The extrusion temperature of the inclusion material should not be too high, however, otherwise it melts the ice cream before the layer structure has time to solidify. Thus it is preferred that the extrusion temperature of the inclusion material is less than 70°C, more preferably less than 60°C and optimally from 30 to 50°C.

Preferably both the extrusion of the streams and movement of the outlets are continuous as this ensures even distribution of the inclusion material.

To provide for long, thin layers it is preferred that each outlet comprises a die having a shape with an aspect ratio greater than 1, more preferably from 2 to 1000. A preferred shape for the dies is rectangular. As used herein, the term "aspect ratio" refers to the ratio of the length to the width of the die orifice, wherein the length is defined as the longest dimension of the orifice which is orthogonal to the extrusion direction and the width is defined as the shortest dimension of the orifice which is orthogonal to both the extrusion direction and the length. Thus a circular orifice has an aspect ratio of 1 and a rectangular orifice with sides of 1 mm and 1 cm has an aspect ratio of 10.

The process may comprise the additional step of mechanically disrupting the layers of inclusion material to produce a random pattern of inclusion material. For example the frozen confection may be subject to additional shear.

The frozen confection is preferably hardened for stable storage and distribution. Thus the process preferably comprises the additional step of cooling the confection to a temperature below -18°C, more preferably to a temperature of from -20 to -40°C.

In a yet further aspect, the present invention provides a preferred apparatus for preparing the frozen confection, the apparatus comprising:
- a first series of outlets disposed to extrude a plurality of parallel streams of confection material in an extrusion direction;
- a second series of outlets interspersed between the first series and disposed to extrude a plurality of parallel streams of flowable inclusion material in the extrusion direction;
- a first feeder means for supplying confection material to the first series of outlets;
- a second feeder means for supplying flowable inclusion material to the second series of outlets; and
- a drive means for translating the outlets in a direction opposite to the extrusion direction.

Preferably, the apparatus additionally comprises a container arranged to receive the streams of confection material and flowable inclusion material. Preferably the container is sized such that the outlets fit within the container. Preferably also the container has a length and a width in orthogonal directions to the extrusion direction and wherein the container is sized such that the outlets are disposed over substantially the whole length and width of the container as this allows for filling of the streams with minimum spreading of the layers formed by the extruded streams.

### Detailed Description

The present invention will be further described with reference to the drawings in which:
- **Fig 1:**: shows a plan (bottom) view of the outlets of an apparatus according to the invention.
- **Fig. 2:**: shows a vertical section along the line A-A of Fig.1.
- **Fig. 3:**: shows a vertical section through the outlets of an apparatus according to the invention during filling of a container.
- **Fig. 4:**: shows a plan (top) view of a frozen confection according to the invention.
- **Fig. 5:**: shows a vertical section along the line B-B of Fig. 5.

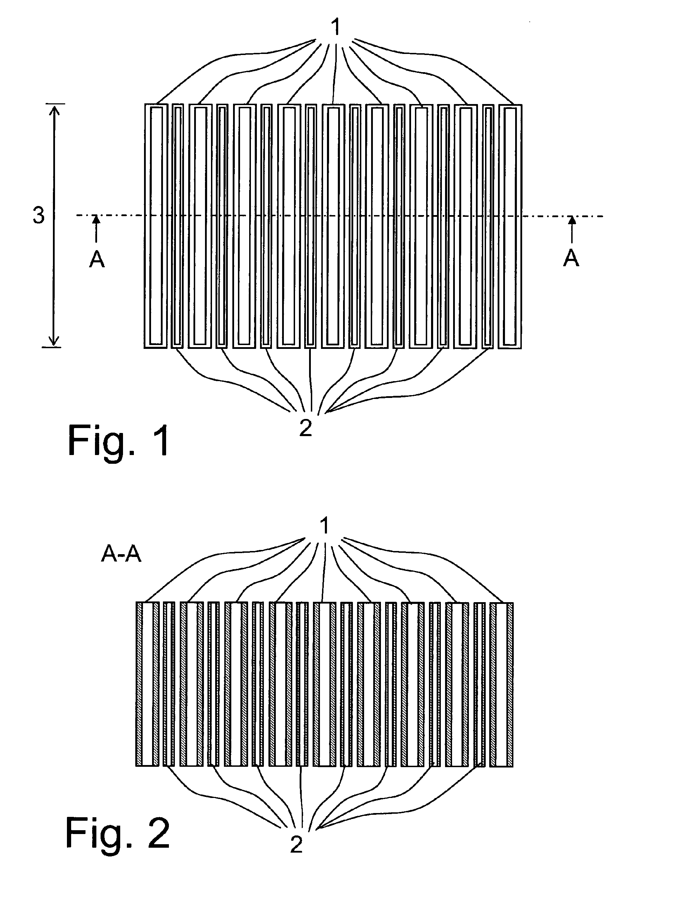

Figs 1 and 2 show the outlets of an apparatus according to the invention. In this embodiment there are 9 outlets (1) for frozen confection material and 8 outlets (2) for inclusion material, although the precise number of outlets is not critical. The outlets each terminate in rectangular die (see Fig. 1) with a high aspect ratio such that material extruded from an outlet is produced in a long, thin stream. The length (3) of each outlet is only slightly smaller than the length of the container to be described below. Furthermore, the number of outlets is selected to be such that the outlets are disposed over substantially the whole width of the container. The dies of the outlets (2) for inclusion material are substantially thinner than the outlets (1) those of the for frozen confection material to allow for the extrusion of thinner streams of inclusion material.

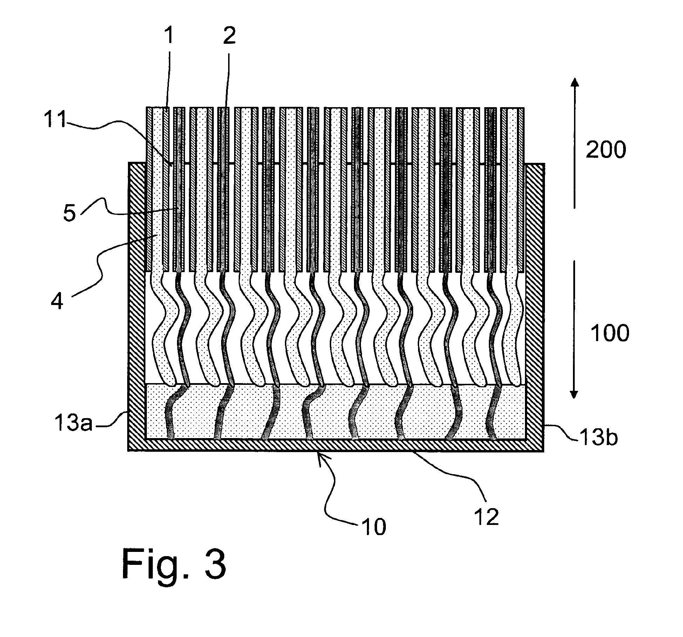

Fig 3 illustrates a process according to the invention employing the outlets illustrated in Figs 1 and 2. The outlets (1, 2) are placed within a container (10). The container comprises an opening (11) at the top opposing an end wall (12) at the bottom. The container (10) is approximately cuboid in shape and thus extending between the opening (11) and the end wall (12) is a side wall (13). The side wall comprises four faces, each opposing one other face. Two opposing faces (13a, 13b) are shown in Fig. 3. At the start of the process, the dies of the outlets (1, 2) are located near the end wall (12) of the container (10). Frozen confection material (4), such as ice cream is then supplied to the outlets (1) for frozen confection material by a feeder means, such as an ice cream freezer (not shown). Simultaneously, inclusion material (5) is supplied in a flowable state to the outlets (2) for frozen inclusion material by a feeder means (not shown). The confection material (4) and inclusion material (5) are then extruded as parallel streams from the respective outlets (1, 2) in a downward direction (100). As extrusion progresses and the container (10) is filled, a drive means (not shown) translates the outlets (1, 2) in an upward direction (200). The materials are extruded as wave-like streams owing to the selected flow rate and viscosity of the materials. Once the outlets (1, 2) pass the opening (11), the supply of material to the outlets (1, 2) is stopped.

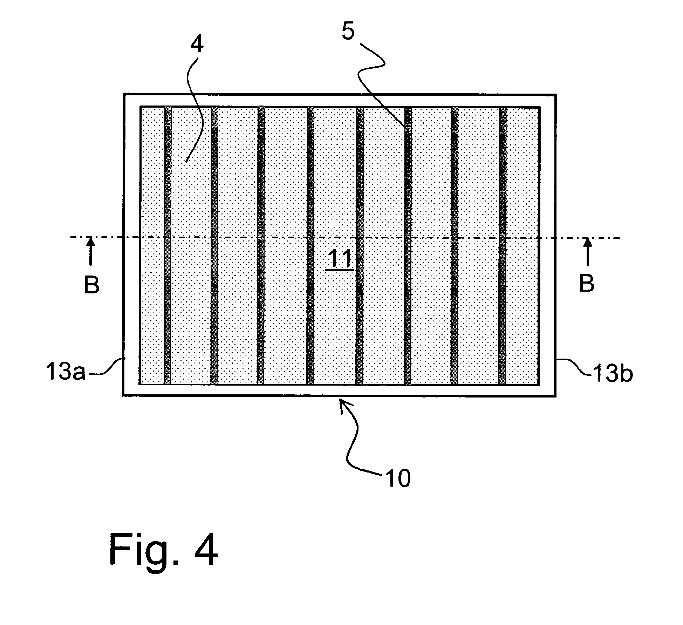

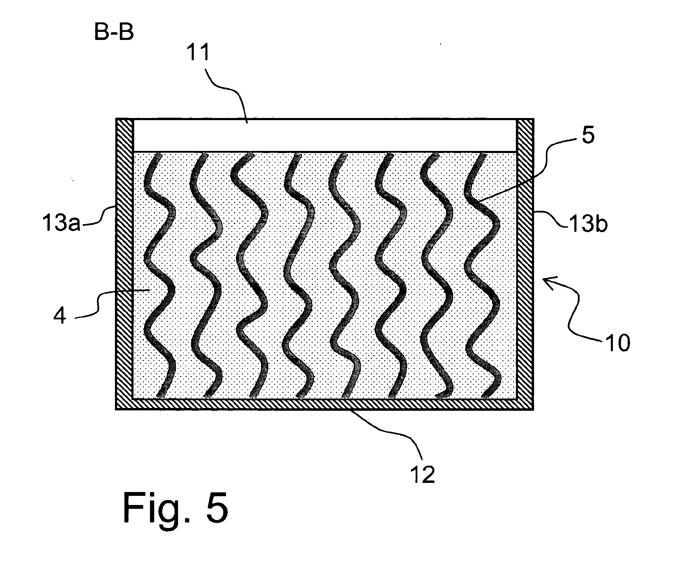

The final frozen confection is shown in Figs 4 and 5. As can be seen, the frozen confection comprises arranged layers of inclusion material (5) and confection material (4) in a container (10), wherein the container (10) has an opening (11) suitable for scooping, and wherein the layers extend away from the opening (11) and have a wavelike shape (see Fig. 5). Also seen in Fig, 5 is that the layers extend for substantially the whole distance between the opening (11) and the end wall (12). The layers are arranged for the whole width of the opening (11) and because the opening (11) extends for the width of the container, the layers are arranged for substantially the whole distance between two of the opposing faces (13a, 13b), whilst extending substantially parallel to the two faces (13a, 13b).

In use, an ice cream scoop is inserted through the opening (11) and contacted with the confection. Typically the scoop will be drawn through the confection in a direction between two of the opposing faces (for example from face 13a to face 13b). As a result the layers are disrupted and an apparently random pattern of inclusion material is produced in the portion.

### Example

A frozen confection was produced substantially as described in the foregoing detailed description except the number of outlets (1) for confection material was 8 and the number of outlets (2) for inclusion material was 7. The confection material was aerated ice cream extruded at a temperature of -6°C and the inclusion material was chocolate couverture with a sucrose content of around 32% by weight and a fat content of around 59% by weight. The couverture had a solidification temperature of around 20°C and was extruded at 40°C, wherein it had a viscosity of 60 to 120 centipoise.

A section through the resulting frozen confection was cut to reveal that the confection comprised vertical layers of ice cream and couverture with a wavelike appearance. Upon scooping the confection produced portions wherein the couveture had the form of apparently randomly dispersed pieces.

## Claims

1. A frozen confection having arranged layers of inclusion material and confection material in a container, wherein the container has an opening suitable for scooping, **characterized in that** the layers extend away from the opening and are arranged for the whole width of the opening.

2. A frozen confection according to claim 1, wherein the layers have a wavelike shape.

3. A frozen confection according to claim 1 or claim 2 wherein the container has an end-wall opposite the opening and wherein the layers extend for substantially the whole distance between the opening and the end wall.

4. A frozen confection according to any one of the preceding claims wherein the container has a side wall extending away from the opening, the side wall comprising at least two opposing faces and wherein the layers extend substantially parallel to the two faces.

5. A frozen confection according to claim 4 wherein the layers are arranged for substantially the whole distance between the two faces.

6. A frozen confection according to any of the preceding claims, wherein each layer of inclusion material has a thickness of less than 2 mm.

7. A frozen confection according to claim 6 wherein each layer of inclusion material is 0.5 -1.5 mm thick.

8. A frozen confection according to any of the preceding claims, wherein the inclusion material is a crispy composition.

9. A frozen confection according to claim 8 wherein the inclusion material is a fat-based composition such as chocolate.

10. A frozen confection according to any of the preceding claims, wherein the confection material is ice cream, fat-free ice cream, sorbet, frozen yogurt or a mixture thereof.

11. A method for serving a portion of frozen confection, the method comprising:
- providing a frozen confection according to any one of the preceding claims; and
- scooping a portion from the frozen confection, thereby disrupting the layers of inclusion material to produce a random pattern of inclusion material in the portion.

12. A process for the production of a frozen confection, the process comprising:
- providing a container having an opening suitable for scooping;
- extruding a plurality of streams of confection material into the container, each stream being extruded from an outlet; and
- extruding a plurality of streams of flowable inclusion material into the container between the streams of confection material, each stream being extruded from an outlet;
wherein during extrusion of the confection material and flowable inclusion material the outlets are within the container and are moved towards the opening thereby to form arranged layers of confection material and inclusion material extending away from the opening.

13. A process according to claim 12 wherein the container comprises an end wall opposite the opening and wherein during extrusion of the confection material and flowable inclusion material the outlets are moved from the end wall to the opening.

14. A process according to claim 12 or 13, wherein the extrusion temperature of the confection material is between -4°C to -7°C.

15. A process according to any of claims 12 to 14 wherein the process comprises the additional step of mechanically disrupting the layers of inclusion material to produce a random pattern of inclusion material.

16. An apparatus for preparing a frozen confection, the apparatus comprising:
- a first series of outlets disposed to extrude a plurality of parallel streams of confection material in an extrusion direction;
- a second series of outlets interspersed between the first series and disposed to extrude a plurality of parallel streams of flowable inclusion material in the extrusion direction;
- a first feeder means for supplying confection material to the first series of outlets;
- a second feeder means for supplying flowable inclusion material to the second series of outlets; and
- a drive means for translating the outlets in a direction opposite to the extrusion direction.

17. An apparatus according to claim 16 wherein the apparatus additionally comprises a container arranged to receive the streams of confection material and flowable inclusion material.

18. An apparatus according to claim 17 wherein the container is sized such that the outlets fit within the container.

19. An apparatus according to claim 18 wherein the container has a length and a width in orthogonal directions to the extrusion direction and wherein the container is sized such that the outlets are disposed over substantially the whole length and width of the container.

## Patentansprüche

1. Gefrorenes Konfekt, bei dem in einem Behälter Lagen aus Einhüllmaterial und Konfektmaterial angeordnet sind, wobei der Behälter eine Öffnung besitzt, die für ein Schöpfen geeignet ist, **dadurch gekennzeichnet, dass** sich die Lagen von der Öffnung weg erstrecken und über die gesamte Breite der Öffnung angeordnet sind.

2. Gefrorenes Konfekt nach Anspruch 1, wobei die Lagen eine wellenartige Form haben.

3. Gefrorenes Konfekt nach Anspruch 1 oder nach Anspruch 2, wobei der Behälter eine Stirnwand gegenüber der Öffnung besitzt und wobei die Lagen sich im Wesentlichen über die gesamte Strecke zwischen der Öffnung und der Stirnwand erstrecken.

4. Gefrorenes Konfekt nach einem der vorhergehenden Ansprüche, wobei der Behälter eine Seitenwand besitzt, die sich von der Öffnung weg erstreckt,
wobei die Seitenwand wenigstens zwei gegenüberliegende Flächen aufweist und wobei sich die Lagen im Wesentlichen parallel zu den zwei Flächen erstrecken.

5. Gefrorenes Konfekt nach Anspruch 4, wobei die Lagen im Wesentlichen auf der gesamten Strecke zwischen den zwei Flächen angeordnet sind.

6. Gefrorenes Konfekt nach einem der vorhergehenden Ansprüche, wobei jede Lage aus Einhüllmaterial eine Dicke von weniger als 2 mm hat.

7. Gefrorenes Konfekt nach Anspruch 6, wobei jede Lage aus Einhüllmaterial eine Dicke im Bereich von 0,5 bis 1,5 mm hat.

8. Gefrorenes Konfekt nach einem der vorhergehenden Ansprüche, wobei das Einhüllmaterial eine Knusperzusammensetzung ist.

9. Gefrorenes Konfekt nach Anspruch 8, wobei das Einhüllmaterial eine Zusammensetzung auf Fettbasis wie etwa Schokolade ist.

10. Gefrorenes Konfekt nach einem der vorhergehenden Ansprüche, wobei das Konfektmaterial Eiskrem, fettfreie Eiskrem, Fruchteis, gefrorener Joghurt oder eine Mischung hiervon ist.

11. Verfahren zum Servieren eines Teils eines gefrorenen Konfekts, wobei das Verfahren umfasst:
- Bereitstellen eines gefrorenen Konfekts nach einem der vorhergehenden Ansprüche; und
- Schöpfen eines Teils aus dem gefrorenen Konfekt, wodurch die Lagen aus Einhüllmaterial zerbrochen werden, um in dem Teil ein Zufallsmuster aus Einhüllmaterial zu erzeugen.

12. Prozess für die Herstellung eines gefrorenen Konfekts, wobei der Prozess umfasst:
- Bereitstellen eines Behälters, der eine Öffnung besitzt, die für ein Schöpfen geeignet ist;
- Extrudieren mehrerer Ströme aus Konfektmaterial in den Behälter, wobei jeder Strom von einem Auslass extrudiert wird; und
- Extrudieren mehrerer Ströme eines fließfähigen Einhüllmaterials in den Behälter zwischen den Strömen aus Konfektmaterial, wobei jeder Strom von einem Auslass extrudiert wird;
wobei sich während des Extrudierens des Konfektmaterials und des fließfähigen Einhüllmaterials die Auslässe innerhalb des Behälters befinden und zu der Öffnung bewegt werden, wodurch angeordnete Lagen aus Konfektmaterial und aus Einhüllmaterial gebildet werden, die sich von der Öffnung weg erstrecken.

13. Prozess nach Anspruch 12, wobei der Behälter eine Stirnwand gegenüber der Öffnung aufweist und wobei während des Extrudierens des Konfektmaterials und des fließfähigen Einhüllmaterials die Auslässe von der Stirnwand zu der Öffnung bewegt werden.

14. Prozess nach Anspruch 12 oder 13, wobei die Extrusionstemperatur des Konfektmaterials im Bereich von -4°C bis -7°C liegt.

15. Prozess nach einem der Ansprüche 12 bis 14, wobei der Prozess den zusätzlichen Schritt des mechanischen Zerbrechens der Lagen aus Einhüllmaterial umfasst, um ein Zufallsmuster aus Einhüllmaterial zu erzeugen.

16. Vorrichtung zum Zubereiten eines gefrorenen Konfekts, wobei die Vorrichtung umfasst:
- eine erste Reihe von Auslässen, die angeordnet sind, um mehrere parallele Ströme aus Konfektmaterial in einer Extrusionsrichtung zu extrudieren;
- eine zweite Reihe von Auslässen, die in die erste Reihe eingefügt ist und angeordnet ist, um mehrere parallele Ströme aus fließfähigem Einhüllmaterial in Extrusionsrichtung zu extrudieren;
- ein erstes Beschickungsmittel zum Liefern von Konfektmaterial zu der ersten Reihe von Auslässen;
- ein zweites Beschickungsmittel zum Liefern von fließfähigem Einhüllmaterial zu der zweiten Reihe von Auslässen; und
- ein Antriebsmittel zum translatorischen Bewegen der Auslässe in einer Richtung entgegengesetzt zu der Extrusionsrichtung.

17. Vorrichtung nach Anspruch 16, wobei die Vorrichtung zusätzlich einen Behälter umfasst, der dazu ausgelegt ist, die Ströme aus Konfektmaterial und fließfähigem Einhüllmaterial aufzunehmen.

18. Vorrichtung nach Anspruch 17, wobei der Behälter so bemessen ist, dass die Auslässe in den Behälter passen.

19. Vorrichtung nach Anspruch 18, wobei der Behälter eine Länge und eine Breite in zu der Extrusionsrichtung senkrechten Richtungen hat und wobei der Behälter so bemessen ist, dass die Auslässe im Wesentlichen über die gesamte Länge und die gesamte Breite des Behälters angeordnet sind.

## Revendications

1. Confiserie surgelée comprenant des couches agencées de matière d'inclusion et de matière de confiserie dans un récipient, dans laquelle le récipient a un ouverture appropriée pour se servir avec une cuillère, **caractérisée en ce que** les couches s'étendent à distance de l'ouverture et sont agencées sur toute la largeur de l'ouverture,

2. Confiserie surgelée selon la revendication 1, dans laquelle les couches ont une forme de vague.

3. Confiserie surgelée selon la revendication 1 ou la revendication 2, dans laquelle le récipient a une paroi d'extrémité opposée à l'ouverture et dans laquelle les couches s'étendent sensiblement sur toute la distance entre l'ouverture et la paroi d'extrémité.

4. Confiserie surgelée selon l'une quelconque des revendications précédentes, dans laquelle le récipient a une paroi latérale s'étendant à distance de l'ouverture, la paroi latérale comprenant au moins deux faces opposées et dans laquelle les couches s'étendent sensiblement parallèlement aux deux faces.

5. Confiserie glacée selon la revendication 4, dans laquelle les couches sont agencées sensiblement sur toute la distance entre les deux faces.

6. Confiserie surgelée selon l'une quelconque des revendications précédentes, dans laquelle chaque couche de matière d'inclusion a une épaisseur inférieure à 2 mm.

7. Confiserie surgelée selon la revendication 6, dans laquelle chaque couche de matière d'inclussion a une épaisseur de 0,5 - 1,5 mm.

8. Confiserie surgelée selon l'une quelconque des revendications précédentes, dans laquelle la matière d'inclusion est une composition croustillante.

9. Confiserie surgelée selon la revendication 8, dans laquelle la matière d'inclusion est une composition à base de matières grasses comme le chocolat.

10. Confiserie surgelée selon l'une quelconque des revendications précédentes, dans laquelle la matière de confiserie est de la crème glacée, de la crème glacée sans matières grasses, du sorbet, du yaourt surgelé ou leur mélange.

11. Procédé pour servir une portion de confiserie surgelée, le procédé comprenant les étapes consistant à :
■ prévoir une confiserie surgelée selon l'une quelconque des revendications précédentes ; et
■ prélever à la cuillère une portion de la confiserie surgelée, cassant ainsi les couches de la matière d'inclusion pour produire un modèle aléatoire de matière d'inclusion dans la portion.

12. Procédé pour la production d'une confiserie surgelée, le procédé comprenant les étapes consistant à :
■ prévoir un récipient ayant une ouverture appropriée pour se servir à la cuillère ;
■ extruder une pluralité de flux de matière de confiserie dans le récipient, chaque flux étant extrudé par une sortie ; et
■ extruder une pluralité de flux de matière d'inclusion liquide dans le récipient entre les flux de matière de confiserie, chaque flux étant extrudé par une sortie ;
dans lequel, pendant l'extrusion de la matière de confiserie et la matière d'inclusion liquide, les sorties sont à l'intérieur du récipient et sont déplacées vers l'ouverture pour former ainsi des couches agencées de matière de confiserie et de matière d'inclusion s'étendant à distance de l'ouverture.

13. Procédé selon la revendication 12, dans lequel le récipient comprend une paroi d'extrémité opposée à l'ouverture et dans lequel pendant l'extrusion de la matière de confiserie et de la matière d'inclusion liquide, les sorties sont déplacées de la paroi d'extrémité vers l'ouverture.

14. Procédé selon la revendication 12 ou 13, dans lequel la température d'extrusion de la matière de confiserie est comprise entre -4°C et -7°C.

15. Procédé selon l'une quelconque des revendications 12 à 14, dans lequel le procédé comprend l'étape supplémentaire consistant à arrêter mécaniquement les couches de matière d'inclusion pour produire un modèle aléatoire de matière d'inclusion.

16. Appareil pour préparer une confiserie surge-liée, l'appareil comprenant :
■ une première série de sorties disposées pour extruder une pluralité de flux parallèles de matière de confiserie dans une direction d'extrusion ;
■ une seconde série de sorties parsemées entre la première série et disposée pour extruder une pluralité de flux parallèles de matière d'inclusion liquide dans la direction d'extrusion ;
■ des premiers moyens d'alimentation pour alimenter la matière de confiserie à la première série de sorties ;
■ des secondes moyens d'alimentation pour alimenter la matière d'inclusion liquide à la seconde série de sorties ; et
■ des moyens d'entraînement pour translater les sorties dans une direction opposée à la direction d'extrusion.

17. Appareil selon la revendication 16, dans lequel l'appareil comprend, de plus, un récipient agencé pour recevoir les flux de matière de confiserie et la matière d'inclusion liquide

18. Appareil selon la revendication 17, dans lequel le récipient est dimensionné de sorte que les sorties s'adaptent à l'intérieur du récipient.

19. Appareil selon la revendication 18, dans lequel le récipient a une longueur et une largeur dans des directions orthogonales par rapport à la direction d'extrusion et dans lequel le récipient est dimensionné de sorte que les sorties sont disposées sensiblement sur toute la longueur et sur toute la largeur du récipient.
